# EUROPEAN PATENT SPECIFICATION

(11) **EP 2 540 676 B1**
(45) Date of publication and mention of the grant of the patent: **14.11.2018**
(21) Application number: 10856097.0
(22) Date of filing: 27.12.2010
(51) Int. Cl.: C02F 1/58, B01D 21/00, B01D 21/24, C02F 1/52

(54) **CONTINUOUS FLOW REACTOR AND METHOD FOR TREATING WASTEWATER HAVING HIGH-CONCENTRATION NITROGEN AND PHOSPHORUS**
DURCHFLUSSREAKTOR UND VERFAHREN ZUR BEHANDLUNG VON ABWASSER MIT HOHEM STICKSTOFF- UND PHOSPHORGEHALT
RÉACTEUR FONCTIONNANT EN CONTINU ET PROCÉDÉ DE TRAITEMENT DES EAUX USÉES À FORTE CONCENTRATION EN AZOTE ET EN PHOSPHORE

(30) Priority: 17.08.2010 CN 201010254867
(43) Date of publication of application: 02.01.2013
(73) Proprietor: Nanjing University, Nanjing, Jiangsu 210093 (CN)
(72) Inventor: REN, Hongqiang, Nanjing Jiangsu 210093 (CN); LI, Qiucheng, Nanjing Jiangsu 210093 (CN); ZHANG, Tao, Nanjing Jiangsu 210093 (CN); DING, Lili, Nanjing Jiangsu 210093 (CN); XU, Ke, Nanjing Jiangsu 210093 (CN); REN, Xinkun, Nanjing Jiangsu 210093 (CN)
(74) Representative: Engelhard, Markus
(86) International application number: PCT/CN2010/080292
(87) International publication number: WO 2012/022099

(56) References cited:
- EP-A1- 1 002 563
- WO-A2-2007/058557
- AU-B2- 777 426
- CN-A- 1 850 591
- CN-A- 101 148 301
- CN-A- 101 298 324
- CN-A- 101 555 076
- CN-A- 101 602 535
- CN-C- 100 445 217
- JP-A- 8 024 875
- JP-A- 2000 288 556
- KR-A- 20020 005 521
- KR-A- 20030 034 299
- US-A- 6 086 765
- GUPTA S K ET AL: "Biological oxidation of high strength nitrogenous wastewater", WATER RESEARCH, ELSEVIER, AMSTERDAM, NL, vol. 30, no. 3, 1 March 1996 (1996-03-01), pages 593-600, XP004035025, ISSN: 0043-1354, DOI: 10.1016/0043-1354(95)00172-7

## Description

### Field of the Invention

The invention relates to a device for treating nitrogen- and phosphorus- containing wastewater, specifically, a continuous-flow reactor for recovering nitrogen and phosphorus from wastewater on the basis of crystallization of magnesium ammonium phosphate (hereafter referred to as MAP).

### Background of the Invention

In recent years, the environmental pollution attributive to the continuous population growth throughout the world and the rapid industrialization has become increasingly grave. The discharge of a large quantity of nitrogen- and phosphorus-containing industrial wastewater and domestic sewage has caused severe eutrophication of water bodies. Currently, China enacts strict laws, regulations and national standards for wastewater discharge in order to control the discharge of nitrogen and phosphorus, which has attracted wide attention in the related fields. In addition, the proved reserves of phosphate ore are limited. Some researchers predicted that 50% of phosphate resources would be used up within the coming 60-70 years. In order to solve increasingly demanding environmental problems and to achieve sustainable development of natural resources and social economy, such nutrients as nitrogen and phosphorus should be recovered for further use. In fact, the recyclable use of natural resources has become one of the most promising R&D fields in the world.

Currently, the nitrogen and phosphorus existing in the industrial wastewater and domestic sewage are mainly NH₄⁺ and PO₄³⁺, which make it possible to recover nitrogen and phosphorus through the crystallization process of MAP. When magnesium is added into the wastewater with highly concentrated nitrogen and phosphorus, the following reaction occurs: Mg²⁺+NH⁴⁺+P₄³⁻+6H₂O←→MgNH₄PO₄·6H₂O. MAP is a kind of crystal hardly soluble in water. It contains both nitrogen and phosphorus, and these nutrients make it an excellent slow-release fertilizer. Comparing with other currently used fertilizers, for example, urea, MAP presents many advantages such as lower content of heavy metals, longer release duration, higher absorption efficiency, and lower cost and without secondary pollution. In some other countries, MAP has been successfully promoted as a slow-release fertilizer and achieved great market benefits. Therefore, the high efficiency of MAP crystallizatio in recovering nitrogen and phosphorus has become one of heated orientations in the related fields. By now, recovering nitrogen and phosphorus through MAP crystallization has already widely applied in Japan, North America and European countries, and great treatment efficiency has been obtained. This art is often adopted in the preliminary and advanced phases of wastewater treatment. Some foreign researchers combined fluidized-bed reactor or globe reactor and MAP crystallization to treat the anaerobic digestion effluent of dairies, coking wastewater, garbage percolate and livestock wastewater. The general recovery rate of this art is over 80% (HUO Shouliang, XI Beidou, LIU Hongliang, et, al. "Romoval and recovery of nitrogen and phosphorus from wastewater by struvite crystallization." Chemical Industry and Engineering Progress 26.3, 2007:4191-419). Many researches indicate that the optimal pH value for recovering nitrogen and phosphorus through MAP crystallization is 9.0∼10.7 (ZOU Anhua, SUN Tichang, Xing Yi, et, al. "Effect of pH on the Removal of Ammonia-Nitrogen from Wastewater." Environmental Sciences Trends 2005(4): 4-6.); even though the methods and testing measures adopted in the researches are different, and optimal pH value varies according to different researches, it is generally agreed that the pH value should be kept around 9.0. Theoretically, the amount ratio of each substance in MAP is n(Mg²⁺): n(NH₄⁺): n(PO₄³⁻)=1:1:1, however, a number of experiments have proved that in practice the removal of nitrogen and phosphorus reaches its highest efficiency when the amount ratio of each substance in MAP is controlled at n(Mg²⁺): n(NH₄⁺): n(PO₄³⁻)=1.2∼1.4: 1: 0.8∼1. Therefore, the quantity and type of magnesium used herein are of crucial significance in forming MAP precipitation, and the choice of this precipitant should be changed in accordance with specific objectives of removing and recovering nitrogen and/or phosphate in practice.

Currently, most industrial wastewater in China is characterized with high concentration of pollutants and large discharge volume, which pose great technical challenge to the treatment. In the experiments of removing and recovering nitrogen and phosphorus through MAP crystallization carried out by both Chinese researchers and researchers from other countries, most reactors are designed in the mode of fluidized-beds with either "Upper-in, Lower-out" or "Lower-in, Upper-out" sequence. Such a design presents a variety of limitations, such as complex working procedures, low treatment volume, great turbulent flow in the reactor, difficulty in obtaining high recovery rate of nitrogen and phosphorus simultaneously, difficulty in separating the precipitate from water, and low purity of MAP. In order to overcome the limitations mentioned above, some researchers, both at home and abroad, have adopted the continuous-flow reactor to recover nitrogen and phosphorus. According to the existing literature, there exists a continuous-flow reactor, the upper part of which is designed for inflowing and coagulation processes, and the lower part of which for static settling and sludge discharge processes; there is a baffle between the upper and the lower part, and an outlet in the lower edge of the baffle. Though this reactor enjoys larger treatment volume, the crystallized MAP is likely to form sediment at the outlet after a certain period of operation, which consequently lowers down the outflowing effect. In addition, there are other restraints such as the quick flowing speed of wastewater and a large amount of turbulent flow in the reactor. The general performance of this reaction method is not satisfactory enough. In some cases, its efficiency is even lower than that of the traditional sequential reactor (J.A. Wilsenach, et, al. "Phosphate and potassium recovery from source separated urine through struvite precipitation." Water Research 41(2007):458-466). No literature, both at home and abroad, has disclosed such inventions as separate zones for coagulation and precipitation in the reactor, the zone for inclined-plate settling, the U-shaped, "upper-in, upper-out" design for the flowing channel of wastewater. Currently, most related researches focus on the treatment of wastewater with low concentration of nitrogen and phosphorus, and the researches on the treatment of wastewater with the concentration higher than 200mg/L are rarely seen in the literature. Therefore, it has become one of the central tasks in this field to develop a continuous-flow reactor for recovering highly concentrated nitrogen and phosphorus in wastewater in a high-efficient and stable way.

### Summary of the Invention

### 1. The Technical Problems to Solve

This invention provides a continuous-flow reactor for stably treating wastewater with high-concentration of nitrogen and phosphorus in order to overcome such limitations shown in the existing arts as complex working procedures, low treatment volume, great turbulent flow in the reactor and long precipitation process, and to improve the effect of MAP crystallization and precipitation.

### 2. Technical Solutions of This Invention

The technical solutions provided in this invention is as follows:
a continuous-flow reactor for treating wastewater in accordance with the appended claims with high-concentration of nitrogen and phosphorus, consisting of a cylindrical coagulating crystallizer, a funnel-like baffle for protecting static settling and a conical crystallizing static settler, wherein the lower surface of the cylindrical coagulating crystallizer is connected to the upper surface of the conical crystallizing static settler; the funnel-like baffle for protecting static settling is secured on the inner wall of the cylindrical coagulating crystallizer.

The lower part of a cylindrical influent protection weir with serrated slots is connected to the upper part of the cylindrical coagulating crystallizer; the lower surface of the cylindrical coagulating crystallizer is connected to the upper surface of the conical crystallizing static settler; the funnel-like baffle for protecting static settling is secured on the inner wall of the cylindrical coagulating crystallizer; the side surface of a wall-attaching inclined plate settler is secured on the outer wall of the cylindrical coagulating crystallizer; at the lower part of the cylindrical coagulating crystallizer exists a small opening that connects to the wall-attaching inclined plate settler, the mapped surface of the small opening being rectangular; the side surface of a wall-attaching effluent weir with serrated slots is secured on the outer wall of the cylindrical coagulating crystallizer; the upper part of the wall-attaching inclined plate settler is connected to the lower part of the wall-attaching effluent weir with serrated slots.

The cylindrical influent protection weir with serrated slots disclosed herein can protect the feeding inlet of the cylindrical coagulating crystallizer from overflowing that may occur when the influent volume is too large or the outlet at the lower part of the cylindrical coagulating crystallizer is clogged.

The wall-attaching effluent weir with serrated slots disclosed herein can effectively retain MAP crystals so that the turbidity of the effluent is reduced and the separation function of the wall-attaching inclined plate settler is enhanced; the recovery rate of nitrogen and phosphorus is consequently increased.

The coagulating crystallizer disclosed herein is designed in the form of a cylinder, which, compared with those designed in cubic or cuboid form, effectively avoids various interferences caused by the turbulent flow and dead space in the reactor, and consequently enhances the effect of coagulation and agitation. Therefore, the reaction liquid is fully mixed, which greatly increases the recovery rate of nitrogen and phosphorus.

The cylindrical coagulating crystallizer disclosed herein is equipped with an influent pipe, a magnesium feeding pipe, a mechanical agitator or aeration distribution pipes, a dynamic pH monitor, and a pH adjusting pipe. The bottom of the conical crystallizing static settler is designed as the outlet for discharging precipitated crystals. Its transversal surface is circular and a valve is equipped therein to control the discharge.

The height-diameter ratio of the cylindrical coagulating crystallizer disclosed herein is 4:1∼2:1; the distance from the connecting part of the funnel-like baffle for protecting static settling and the cylindrical coagulating crystallizer to the bottom of the cylindrical coagulating crystallizer is 1/4∼1/3 of the height of the cylindrical coagulating crystallizer; the height of the wall-attaching inclined plate settler is 3/4∼4/5 of the height of the cylindrical coagulating crystallizer; the angle between the inclined plate of the wall-attaching inclined plate settler and the wall of the cylindrical coagulating crystallizer is 20°∼40°; the angle between the funnel-like baffle for protecting static settling and the wall of the cylindrical coagulating crystallizer is 60°∼80°.

There is also disclosed a method for treating wastewater with highly concentrated nitrogen and phosphorus with a continuous-flow reactor, such method not forming part of the present invention, consisting of the following stages:
(1) startup stage: adjusting wastewater till the mole ratio of NH₄⁺-N and PO₄³⁻-P therein reaches 1∼20:1 and leading the wastewater into the cylindrical coagulating crystallizer; when the wastewater reaches 4/6∼5/6 of the capacity of the cylindrical coagulating crystallizer, adjusting the influent peristaltic pump to keep the influent speed at 0.5∼3L/h; meanwhile, starting the mechanical agitator or pumping the air into the aeration distribution pipes (when the mechanical agitation is adopted, keeping the rotational speed at 30∼150 r/min; when the aerational agitation is adopted, keeping the volumetric ratio of the air and the influent at 5∼20:1); then, adding magnesium into the cylindrical coagulating crystallizer and adjusting the concentration of Mg²⁺ and the influent speed so that the mole ratio of Mg²⁺ and NH₄⁺ in the influent reaches 1∼5:1; turning on the pH adjusting pipe and keeping the pH value at 7∼10;
(2) reactor stabilization stage: the primary effluent is led back into the reactor for a second treatment. When the removal rate of nitrogen and phosphorus in the effluent reaches 95% or higher in a stable way, the effluent is able to be channeled out to the next treatment unit. Turning on the valve at the bottom of the conical crystallizing static settler at regular intervals so that the MAP crystals obtained through coagulation and crystallization can be discharged.

The solution used for the said pH adjustment is either HCl (acidic) solution or NaOH (alkaline) solution. The magnesium used herein is either MgSO4, MgCl, MgO or the mixture of two or three of them.

### 3. Beneficial Effects

Compared with the existing arts, this invention has the following beneficial effects:
(1) providing a continuous-flow reactor to stably treat nitrogen- and phosphorus-containing wastewater and the corresponding treating method, which simplifies the traditional technical procedures, increases the treatment volume, shortens the treatment time and saves the treatment cost.
(2) This invention adopts the U-shaped, "upper-in, upper-out" design for the flowing channel of wastewater, namely, both influent and affluent inlets are located in the upper part of the reactor. This design increases the contact time of the reactants, which consequently guarantees a thorough reaction, enhances the crystallization and precipitation occurred between nitrogen, phosphorus and magnesium in the reaction liquid, and increases the recovery efficiency of nitrogen and phosphorus through MAP crystallization.
(3) This invention separates away the traditional serial procedures of "coagulation-precipitation" by setting up three independent reaction units, namely, the cylindrical coagulating crystallizer, the conical crystallizing static settler and the wall-attaching inclined plate settler; Along with the funnel-like baffle for protecting static settling, the device containing the said reaction units can enormously reduce the negative impact caused by liquid turbulence, avoid mutual interference between coagulation and precipitation, and guarantee desirable effect of MAP crystallization and precipitation. The effluent treated by the said device carries less MAP crystals and shows better water quality.
(4) This invention demonstrates desirable effect in treating wastewater with highly concentrated nitrogen and phosphorus. Under the same working condition, when the concentration of NH₄⁺-N is over 500mg/L and that of PO₄³⁻-P is over 1000mg/L, the recovery rate of nitrogen and phosphorus reaches 95% or higher. The concentration of nitrogen and phosphorus in the effluent is dramatically reduced and the high recovery rate is guaranteed.
(5) During the reaction, the pH value of the reaction liquid is adjusted through adding the adjusting solution into the reaction liquid; the stability of pH value can provide best crystallization conditions, significantly increase the quantity of MAP precipitation, and guarantee its high purity.

### Description of the Drawings

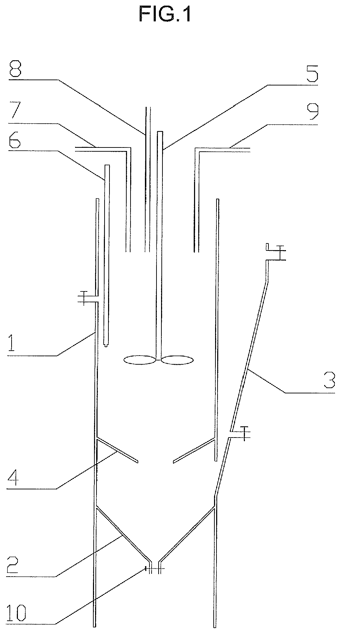

Figure 1 is a structural diagram of a continuous-flow reactor consisting of 1 cylindrical coagulating crystallizer, 2 conical crystallizing static settler, 3 wall-attaching inclined plate settler, 4 funnel-like baffle for protecting static settling, 5 mechanical agitator, 6 pH monitor, 7 influent pipe, 8 magnesium feeding pipe, 9 pH adjusting pipe, 10 valve for discharging MAP crystals;

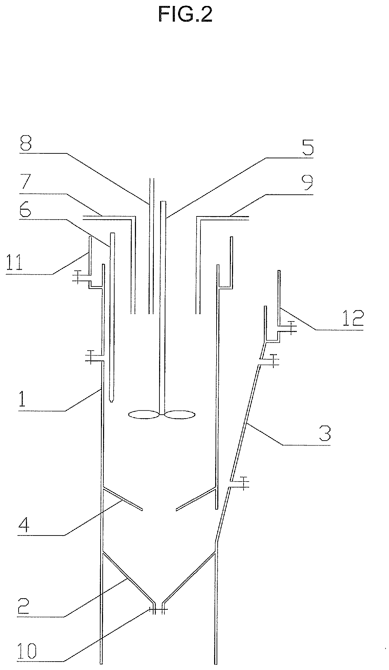

Figure 2 is the structural diagram of the continuous-flow reactor disclosed in this invention consisting of 1 cylindrical coagulating crystallizer, 2 conical crystallizing static settler, 3 wall-attaching inclined plate settler, 4 funnel-like baffle for protecting static settling, 5 mechanical agitator, 6 pH monitor, 7 influent pipe, 8 magnesium feeding pipe, 9 pH adjusting pipe, 10 valve for discharging MAP crystals; 11 cylindrical influent protection weir with serrated slots, 12 wall-attaching effluent weir with serrated slots.

### Specific Embodiments

This invention is further illustrated in combination with the following figures and embodiments:

### Embodiment 1:

As is shown in Figure 2, the continuous-flow reactor for recovering highly concentrated nitrogen and phosphorus from wastewater through MAP crystallization technology consists of a cylindrical coagulating crystallizer 1, a conical crystallizing static settler 2, a wall-attaching inclined plate settler 3, a funnel-like baffle for protecting static settling 4, a mechanical agitator 5, a pH monitor 6, an influent pipe 7, a magnesium feeding pipe 8, a pH adjusting pipe 9, a valve for discharging MAP crystals 10, a cylindrical influent protection weir with serrated slots 11 and a wall-attaching effluent weir with serrated slots 12. The lower part of the cylindrical influent protection weir with serrated slots 11 is connected to the upper part of the cylindrical coagulating crystallizer 1; the lower surface of the cylindrical coagulating crystallizer 1 is connected to the upper surface of the conical crystallizing static settler 2; the funnel-like baffle for protecting static settling 4 is secured on the inner wall of the cylindrical coagulating crystallizer 1; the side surface of the wall-attaching inclined plate settler 3 is secured on the outer wall of the cylindrical coagulating crystallizer 1; at the lower part of the cylindrical coagulating crystallizer1 exists a small opening that connects to the wall-attaching inclined plate settler 3, the mapped surface of the said small opening being rectangular; the side surface of the wall-attaching effluent weir with serrated slots 12 is secured on the outer wall of the cylindrical coagulating crystallizer 1; the upper part of the wall-attaching inclined plate settler 3 is connected to the lower part of the wall-attaching effluent weir with serrated slots 12. The cylindrical coagulating crystallizer 1 disclosed herein is equipped with an influent pipe 7, a magnesium feeding pipe 8, a mechanical agitator 5 or aeration distribution pipes, a dynamic pH monitor 6, and a pH adjusting pipe 9. The bottom of the conical crystallizing static settler 2 is designed as the outlet for discharging precipitated crystals. Its transversal surface is circular and a valve is equipped therein to control the discharge. The total capacity of the said reactor is 2.0L; the height-diameter ratio of the cylindrical coagulating crystallizer 1 is 2:1; the distance from the connecting part of the funnel-like baffle for protecting static settling 4 and the cylindrical coagulating crystallizer 1 to the bottom of the cylindrical coagulating crystallizer 1 is 1/4 of the height of the cylindrical coagulating crystallizer 1; the height of the wall-attaching inclined plate settler 3 is 4/5 of the height of the cylindrical coagulating crystallizer 1; the angle between the inclined plate of the wall-attaching inclined plate settler 3 and the wall of the cylindrical coagulating crystallizer 1 is 25°; the angle between the funnel-like baffle for protecting static settling 4 and the wall of the cylindrical coagulating crystallizer 1 is 60°.

### Embodiment 2:

As is shown in Figure 2, the differences between this embodiment and Embodiment 1 lie in: the total capacity of the said reactor is 2.5L; the height-diameter ratio of the cylindrical coagulating crystallizer1 is 3:1; the distance from the connecting part of the funnel-like baffle for protecting static settling 4 and the cylindrical coagulating crystallizer 1 to the bottom of the cylindrical coagulating crystallizer 1 is 1/3 of the height of the cylindrical coagulating crystallizer 1; the height of the wall-attaching inclined plate settler 3 is 3/4 of the height of the cylindrical coagulating crystallizer 1; the angle between the inclined plate of the wall-attaching inclined plate settler 3 and the wall of the cylindrical coagulating crystallizer 1 is 30°; the angle between the funnel-like baffle for protecting static settling 4 and the wall of the cylindrical coagulating crystallizer 1 is 70°. The rest parameters in this embodiment are the same with those in Embodiment 1.

### Embodiment 3:

The method disclosed in this invention for recovering highly concentrated nitrogen and phosphorus from wastewater through MAP crystallization technology consists of the following stages: (1) startup stage: adjusting wastewater till the mole ratio of NH₄⁺-N and PO₄³⁻-P therein reaches 1.25:1 and leading the wastewater into the cylindrical coagulating crystallizer 1; when the wastewater reaches 5/6 of the capacity of the cylindrical coagulating crystallizer 1, adjusting the influent peristaltic pump to keep the influent speed at 1L/h; meanwhile, starting the mechanical agitator 5 and adjusting its rotational speed to 60r/min; then, adding magnesium into the cylindrical coagulating crystallizer land adjusting the concentration of Mg²⁺ and the influent speed so that the mole ratio of Mg²⁺ and NH₄⁺ in the influent reaches 1:1; turning on the pH adjusting pipe 9 and keeping the pH value at 8.5; (2) reactor stabilization stage: the primary effluent is led back into the reactor for a second treatment. When the removal rate of nitrogen and phosphorus in the effluent reaches 95% or higher in a stable way, the effluent is able to be channeled out to the next treatment unit. Turning on the valve 10 at the bottom of the conical crystallizing static settler 2 at regular intervals so that the MAP crystals obtained through coagulation and crystallization can be discharged.

### Embodiment 4:

The difference between this embodiment and Embodiment 3 is at the startup stage: instead of a mechanical agitator, aeration distribution pipes are adopted to pump the air into the said cylindrical coagulating crystallizer. The volumetric ratio of the pumped air and the influent is 10:1. The rest conditions in this embodiment are the same with those in Embodiment 3.

This invention demonstrates desirable effect in treating wastewater with highly concentrated nitrogen and phosphorus. Under the same working condition, when the concentration of NH₄⁺-N is over 500mg/L and that of PO₄³⁻-P is over 1000mg/L, the recovery rate of nitrogen and phosphorus reaches 95% or higher.

In all embodiments of this invention, the solution used for pH adjustment is either HCl (acidic) solution or NaOH (alkaline) solution.

The magnesium used in all embodiments of this invention is either MgSO4, MgCl, MgO or the mixture of two or three of them.

In all embodiments of this invention, the product MAP crystals or some inert materials with large specific surface area (for example, stainless steel grains or zeolite grains) that are 0.1∼0.5mm in diameter can be directly added into the cylindrical coagulating crystallizer1 as crystal nuclei.

The effect of this invention is testified by the following experiment:
This experiment is an experiment on recovery of nitrogen and phosphorus through MAP crystallization using artificially simulated wastewater. Following up the operation steps of the removal and recovery of nitrogen and phosphorus through MAP crystallization; pumping the simulated wastewater into the cylindrical coagulating crystallizer 1 at the speed of 1L/h through the peristaltic pump and the influent pipe; the simulated wastewater has the following features: c(NH₄⁺-N)=670mg/L, c(PO₄³⁻-P)=2800mg/L, the initial pH=6∼7. Starting the mechanical agitator 5 and adjusting its rotational speed to 80r/min; adding MgCl into the cylindrical coagulating crystallizer 1 through the magnesium feeding pipe 8; adjusting the concentration of MgCl to 4200mg/L and the influent speed to 1L/h; turning on the pH adjusting pipe 9 and adding 10mol/L NaOH solution into the cylindrical coagulating crystallizer 1till the pH value of the reaction liquid reaches 9. The primary effluent is led back into the reactor for a second treatment; After about 40 minutes of reaction, both the removal rate and the recovery rate of nitrogen and phosphorus in the effluent reach 95% or higher; the reactor then enters its stabilization stage; under the same operation conditions, if crystal nuclei are directly added into the cylindrical coagulating crystallizer 1, the recovery rate of NH₄⁺-N and PO₄³⁻-P will increase 2∼3%.

As is shown in this experiment, the continuous-flow reactor for treating wastewater with high-concentration of nitrogen and phosphorus disclosed in this invention can improve the efficiency of recovering NH₄⁺-N and PO₄³⁻-P from the wastewater with highly concentrated nitrogen and phosphorus.

## Claims

1. A continuous-flow reactor for treating wastewater with high-concentration of nitrogen and phosphorus, comprising a cylindrical coagulating crystallizer, a funnel-like baffle for protecting static settling and a conical crystallizing static settler, wherein the lower surface of the said cylindrical coagulating crystallizer is connected to the upper surface of the said conical crystallizing static settler; the said funnel-like baffle for protecting static settling is secured on the inner wall of the said cylindrical coagulating crystallizer, wherein the inclined plate settling zone of said continuous-flow reactor is designed in the form of a wall-attaching inclined plate settler, the side surface of which is secured on the outer wall of the said cylindrical coagulating crystallizer; at the lower part of the said cylindrical coagulating crystallizer exists a small opening that connects to the said wall-attaching inclined plate settler, the mapped surface of the small opening being rectangular; and,
wherein a cylindrical influent protection weir with serrated slots is equipped at the upper part of the said cylindrical coagulating crystallizer; the lower part of said cylindrical influent protection weir with serrated slots is connected to the upper part of the said cylindrical coagulating crystallizer; and,
wherein a wall-attaching effluent weir with serrated slots is equipped at the upper part of the said wall-attaching inclined plate settler; the side surface of the said wall-attaching effluent weir with serrated slots is secured on the outer wall of the said cylindrical coagulating crystallizer; the upper part of the said wall-attaching inclined plate settler is connected to the lower part of the said wall-attaching effluent weir with serrated slots.

2. A continuous-flow reactor for treating wastewater with high-concentration of nitrogen and phosphorus as defined in claim 1, wherein the said coagulating crystallizer is designed in the form of a cylinder, equipped with an influent pipe, a magnesium feeding pipe, a mechanical agitator or aeration distribution pipes, a dynamic pH monitor and a pH adjusting pipe.

3. A continuous-flow reactor for treating wastewater with high-concentration of nitrogen and phosphorus as defined in any of claims 1 to 2, wherein the height-diameter ratio of the said cylindrical coagulating crystallizer is 4:1∼2:1; the distance from the connecting part of the said funnel-like baffle for protecting static settling and the said cylindrical coagulating crystallizer to the bottom of the said cylindrical coagulating crystallizer is 1/4∼1/3 of the height of the said cylindrical coagulating crystallizer; the angle between the said funnel-like baffle for protecting static settling and the wall of the said cylindrical coagulating crystallizer is 60°∼80°.

4. A continuous-flow reactor for treating wastewater with high-concentration of nitrogen and phosphorus as defined in any of claims 1 to 2, wherein the height of the said wall-attaching inclined plate settler is 3/4∼4/5 of the height of the said cylindrical coagulating crystallizer; the angle between the inclined plate of the said wall-attaching inclined plate settler and the wall of the said cylindrical coagulating crystallizer is 20°∼40°.

## Patentansprüche

1. Durchflussreaktor zum Behandeln von Abwasser mit hoher Konzentration an Stickstoff und Phosphor, umfassend einen zylindrischen Flockungskristallisator, eine trichterartige Ablenkplatte zum Schützen statischer Ablagerung und einen konischen kristallisierenden statischen Absetzer, wobei die untere Oberfläche des zylindrischen Flockungskristallisators mit der oberen Oberfläche des konischen kristallisierenden statischen Absetzers verbunden ist; die trichterartige Ablenkplatte zum Schützen statischer Ablagerung an der Innenwand des zylindrischen Flockungskristallisators befestigt ist, wobei die geneigte Plattenabsetzzone des Durchflussreaktors in der Form eines wandanhängenden geneigten Plattenabsetzers gestaltet ist, dessen seitliche Oberfläche an der Außenwand des zylindrischen Flockungskristallisators befestigt ist; an dem unteren Teil des zylindrischen Flockungskristallisators eine kleine Öffnung vorhanden ist, die mit dem wandanhängenden geneigten Plattenabsetzer verbindet, wobei die abgebildete Oberfläche der kleinen Öffnung rechteckig ist; und,
wobei ein zylindrisches Zuflussschutzwehr an dem oberen Teil des zylindrischen Flockungskristallisators mit gezahnten Schlitzen ausgestattet ist; der untere Teil des zylindrischen Zuflussschutzwehrs mit gezahnten Schlitzen mit dem oberen Teil des zylindrischen Flockungskristallisators verbunden ist; und,
wobei ein wandanhängendes Abflusswehr mit gezahnten Schlitzen an dem oberen Teil des wandanhängenden geneigten Plattenabsetzers ausgestattet ist; die seitliche Oberfläche des wandanhängenden Abflusswehrs mit gezahnten Schlitzen an der Außenwand des zylindrischen Flockungskristallisators befestigt ist; der obere Teil des wandanhängenden geneigten Plattenabsetzers mit dem unteren Teil des wandanhängenden Abflusswehrs mit gezahnten Schlitzen verbunden ist.

2. Durchflussreaktor zum Behandeln von Abwasser mit hoher Konzentration an Stickstoff und Phosphor nach Anspruch 1, wobei der Flockungskristallisator in der Form eines Zylinders gestaltet ist, der mit einem Zuflussrohr, einem Magnesiumzufuhrrohr, einem mechanischen Rührwerk oder Belüftungsverteilungsrohren, einem dynamischen pH-Kontrollgerät und einem pH-Einstellrohr ausgestattet ist.

3. Durchflussreaktor zum Behandeln von Abwasser mit hoher Konzentration an Stickstoff und Phosphor nach einem der Ansprüche 1 bis 2, wobei das Höhen-DurchmesserVerhältnis des zylindrischen Flockungskristallisators 4:1∼2:1 ist; der Abstand von dem Verbindungsteil der trichterartigen Ablenkplatte zum Schützen statischer Ablagerung und dem zylindrischen Flockungskristallisator zu dem Boden des zylindrischen Flockungskristallisators 1/4∼1/3 der Höhe des zylindrischen Flockungskristallisators ist; der Winkel zwischen der trichterartigen Ablenkplatte zum Schützen statischer Ablagerung und der Wand des zylindrischen Flockungskristallisators 60°∼80° ist.

4. Durchflussreaktor zum Behandeln von Abwasser mit hoher Konzentration an Stickstoff und Phosphor nach einem der Ansprüche 1 bis 2, wobei die Höhe des wandanhängenden geneigten Plattenabsetzers 3/4∼4/5 der Höhe des zylindrischen Flockungskristallisators ist; der Winkel zwischen der geneigten Platte des wandanhängenden geneigten Plattenabsetzers und der Wand des zylindrischen Flockungskristallisators 20°∼40° ist.

## Revendications

1. Réacteur à flux continu pour le traitement d'eaux usées à concentration élevée en azote et en phosphore, comprenant un cristallisoir cylindrique de coagulation, un déflecteur de type entonnoir pour protéger une décantation statique et un décanteur statique conique de cristallisation, dans lequel la surface inférieure dudit cristallisoir cylindrique de coagulation est connectée à la surface supérieure dudit décanteur statique conique de cristallisation ; ledit déflecteur de type entonnoir pour protéger une décantation statique est fixé sur la paroi interne dudit cristallisoir cylindrique de coagulation, dans lequel la zone de décantation sur plaque inclinée dudit réacteur à flux continu est conçue sous la forme d'un décanteur à plaque inclinée se fixant à une paroi, dont la surface latérale est fixée à la paroi externe dudit cristallisoir cylindrique de coagulation ; au niveau de la partie inférieure dudit cristallisoir cylindrique de coagulation se trouve une petite ouverture qui se connecte audit décanteur à plaque inclinée se fixant à une paroi, la surface définie de la petite ouverture étant rectangulaire ; et
dans lequel un déversoir cylindrique de protection contre les influents à fentes en dents de scie est équipé au niveau de la partie supérieure dudit cristallisoir cylindrique de coagulation ; la partie inférieure dudit déversoir cylindrique de protection contre les influents à fentes en dents de scie est connectée à la partie supérieure dudit cristallisoir cylindrique de coagulation ; et
dans lequel un déversoir d'effluent à fentes en dents de scie se fixant à une paroi est équipé au niveau de la partie supérieure dudit décanteur à plaque inclinée se fixant à une paroi ; la surface latérale dudit déversoir d'effluent à fentes en dents de scie se fixant à une paroi est fixée à la paroi externe dudit cristallisoir cylindrique de coagulation ; la partie supérieure dudit décanteur à plaque inclinée se fixant à une paroi est connectée à la partie inférieure dudit déversoir d'effluent à fentes en dents de scie se fixant à une paroi.

2. Réacteur à flux continu pour le traitement d'eaux usées à concentration élevée en azote et en phosphore selon la revendication 1, dans lequel ledit cristallisoir de coagulation est conçu sous la forme d'un cylindre, équipé d'un tuyau pour influent, d'un tuyau d'alimentation en magnésium, d'un agitateur mécanique ou de tuyaux de distribution d'aération, d'un dispositif de surveillance dynamique de pH et d'un tuyau d'ajustement de pH.

3. Réacteur à flux continu pour le traitement d'eaux usées à concentration élevée en azote et en phosphore selon l'une quelconque des revendications 1 à 2, dans lequel le rapport hauteur-diamètre dudit cristallisoir cylindrique de coagulation est de 4:1 à 2:1; la distance à partir de la partie de connexion dudit déflecteur de type entonnoir pour protéger une décantation statique et dudit cristallisoir cylindrique de coagulation jusqu'au fond dudit cristallisoir cylindrique de coagulation représente 1/4 à 1/3 de la hauteur dudit cristallisoir cylindrique de coagulation ; l'angle entre ledit déflecteur de type entonnoir pour protéger une décantation statique et la paroi dudit cristallisoir cylindrique de coagulation est de 60° à 80°.

4. Réacteur à flux continu pour le traitement d'eaux usées à concentration élevée en azote et en phosphore selon l'une quelconque des revendications 1 à 2, dans lequel la hauteur dudit décanteur à plaque inclinée se fixant à une paroi représente 3/4 à 4/5 de la hauteur dudit cristallisoir cylindrique de coagulation ; l'angle entre la plaque inclinée dudit décanteur à plaque inclinée se fixant à une paroi et la paroi dudit cristallisoir cylindrique de coagulation et de 20° à 40°.
